# EUROPEAN PATENT APPLICATION

(11) **EP 2 392 396 A2**
(43) Date of publication of application: **07.12.2011**
(21) Application number: 11166669.9
(22) Date of filing: 19.05.2011
(51) Int. Cl.: B01F 7/16, F16D 1/08, A21C 1/02, B01F 15/00, B01F 7/00

(54) **System for fastening a kneading tool**

(30) Priority: 01.06.2010 IT TO20100101 U
(71) Applicant: SANCASSIANO S.p.A., I-12060 Roddi d'Alba (Cuneo) (IT)
(72) Inventor: Drocco, Davide, 12060, Roddi d'Alba (Cuneo) (IT)
(74) Representative: Notaro, Giancarlo

(57) **Abstract**

System for fastening a kneading tool to a head assembly of a kneading machine, in particular a machine for kneading food substances, comprising:
- a support structure (11);
- a shaft (9) rotatably mounted on said support structure;
- a kneading tool (17) mounted, rotatably integral, on said shaft.

The tool is fitted on the shaft through an expansion locking device (30).

## Description

The present invention regards a system for fastening a kneading tool to a head assembly of a kneading machine, in particular a machine for kneading food substances.

The present invention has the object of providing a system capable of allowing a simple and quick mounting of kneading tools and simultaneously an efficient separation of the connection and actuation parts of the kneading tool from the environment in which the dough is actually obtained. The latter aspect is particularly important for machines for kneading food substances, where it is absolutely necessary to avoid any contamination of the dough by, for example, the substances used for lubricating the abovementioned connection and actuation parts.

A further object of the present invention is to provide a system for fastening kneading tools capable of allowing the provision for the same head assembly, of different kneading tools and/or drive means interchangeable with each other in a simple and quick manner.

According to the present invention, the objects indicated above are obtained due to a fastening system having the characteristics specifically referred to in the claims that follow.

The claims form an integral part of the technical teaching provided herein in relation to the invention.

The invention will now be described, purely by way of non-limiting example, with reference to the attached representations, wherein:
- figure 1 represents a kneading machine;
- figures 2 to 4 represent details of a head assembly of a kneading machine;
- figure 5 illustrates a cross-sectional view of a detail of a fastening system according to an embodiment.

Illustrated in the following description are various specific details aimed at providing an in-depth understanding of the embodiments. The embodiments may be obtained without one or more specific details, or through other methods, components, materials etc. In other cases, known structures, materials or operations are not shown or described in detail to avoid obscuring the various aspects of the embodiments.

Reference to "an embodiment" in this description indicates that a particular configuration, structure or characteristic described regarding the embodiment is included in at least one embodiment. Hence, expressions such as "in an embodiment", possibly present in various parts of this description do not necessarily refer to the same embodiment. Furthermore, particular configurations, structures or characteristics may be combined in any suitable manner into one or more embodiments.

References herein are used for the ease of understanding and thus they do not define the scope of protection or the range of the embodiments.

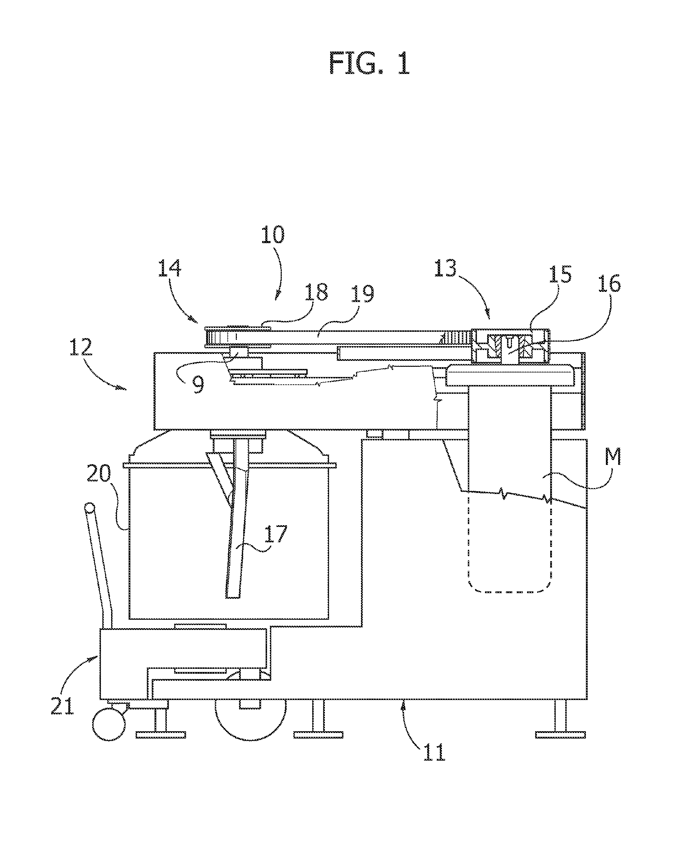

A kneading machine, in particular a machine for kneading food substances is indicated with reference 10 in figure 1. The machine 10 comprises a support framework 11 on which a head assembly 12 comprising a drive unit 13 and a tools assembly 14 is installed.

The drive unit comprises a motor M, a reduction unit and a first pulley 15 fitted on a shaft 16 exiting from the reduction unit. In various embodiments, a gearmotor is provided for alternatively to the motor and the reduction unit separated.

The tools assembly comprises one or more kneading tools 17, each fitted on a lower end of a respective shaft 19, on whose opposite end a second pulley 18 is fitted instead.

The first and second pulley 15, 18 are operatively connected to each other through a drive belt 19.

The kneading machine 10 further comprises a tank 20 in which the kneading is carried out. Such tank is mounted on a carriage 21 which can be snap-anchored to the structure 11 of the head assembly, so as to be extractable with respect to the latter.

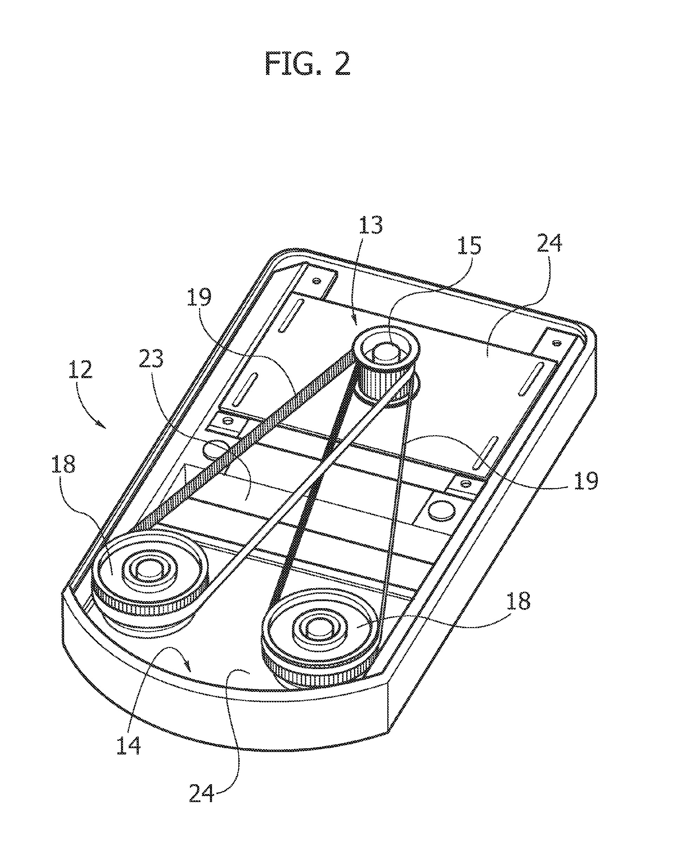

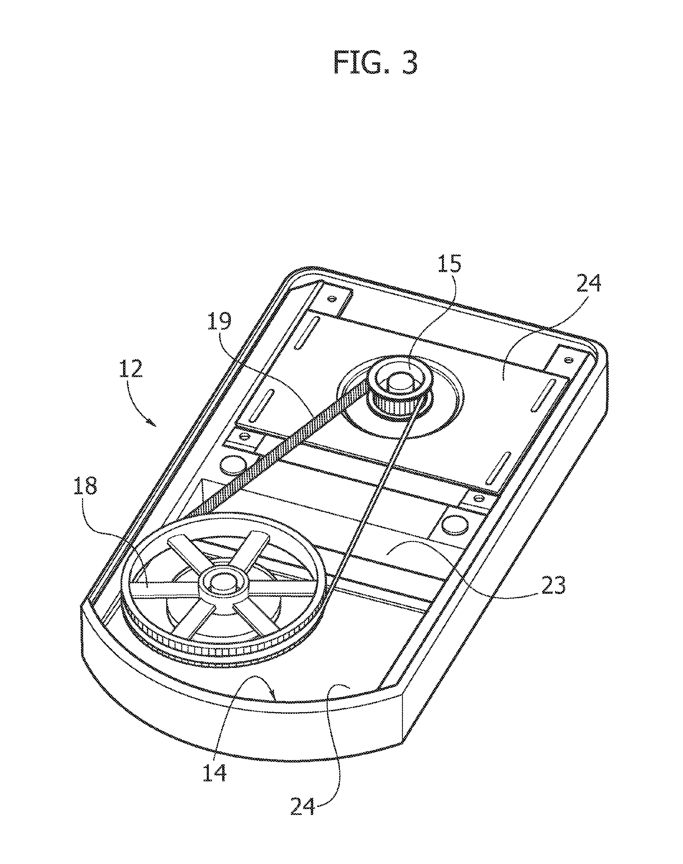

Figures 2 to 5 show the same head assembly 12 in different configurations, which are distinguished from each other due to the fact that they have different tool assemblies and drive units. Such assemblies are easily interchangeable with each other, as described hereinafter.

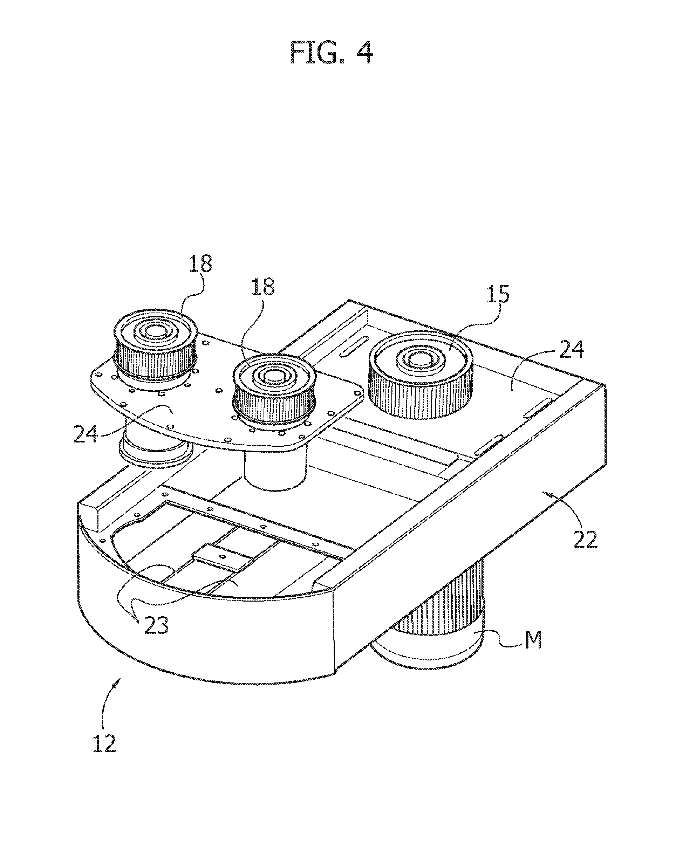

With reference to figure 4, the head assembly 12 provides a framework 22 provided with horizontal beams 23 constituting the support structure of the framework 22.

As observable in figures 2 to 4, both the drive unit and the tools assembly are fastened to respective support plates 24.

The plates 24 each have an opening, in a substantially central position, which allows the shaft exiting from the reduction unit or the shaft on which the kneading tool is mounted, to extend above the plate, so that the first and second pulleys are mounted, thereon, above such plate.

The plates 24, alongside the respective drive unit or tools fastened thereto, are thus placed on corresponding edges of the beams 23.

Thus, the replacement of the drive means or tools simply requires the removal of the plate 24 to which the drive unit or tools assembly intended to be removed is fastened and the installation of the plate carrying the desired new motor or tools assembly.

Furthermore, considering what has been outlined above it is clear that the configuration of the previously indicated head assembly can b e advantageously exploited to simplify the production and management of batches of kneading machines with different tools and/or drive units. Actually, the production of such batches would require providing the same support framework of the head assembly for all the kneading machines and solely differentiating the type of motor and/or tools assembly to be fastened to each of the plates 24 which shall be mounted on such framework.

In various embodiments, the tools assembly can be fastened to the plate 24 as described hereinafter.

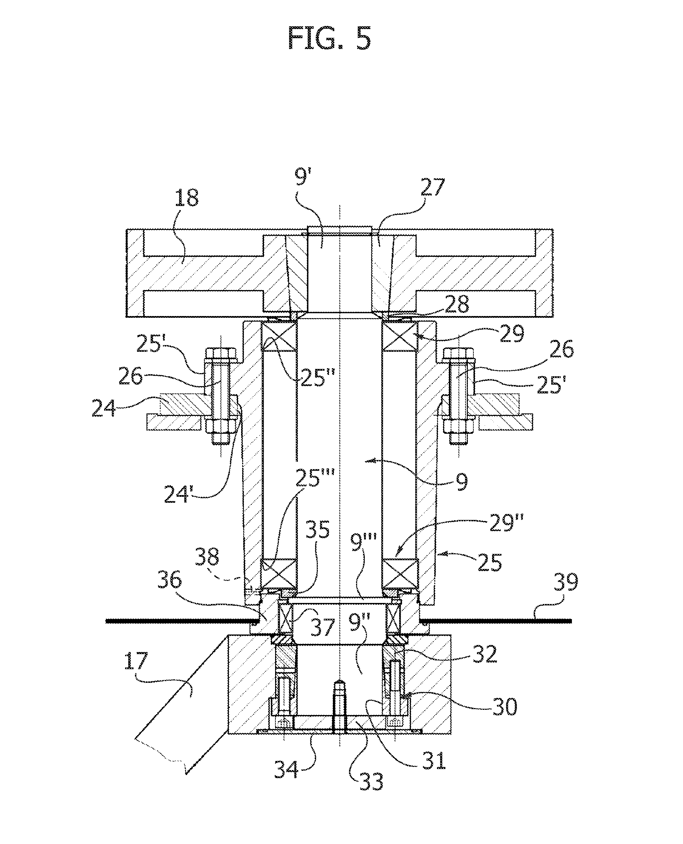

With reference to figure 5, a kneading tool 17 is fitted on the lower end 9" of a substantially vertical shaft 9, rotatably supported by a tubular support structure 25, which in turn rests on the plate 24 at its own radial arms 25', fastened to the same plate 24 by means of bolts 26.

In particular, the shaft 9 traverses an opening 24' of the plate 24 and the same tubular structure 25, extending thereabove with its own upper end portion 9'. A driven pulley 18 is fitted on such end portion 9', operatively connected to the drive unit through a drive belt 19, as described above with reference to figures 1 to 5.

Specifically, the pulley 18 is coupled to a hub 27 pressure-fitted to the upper end 9' of the shaft. The interface between the hub and the pulley is constituted by respective conical surfaces cooperating with each other to prevent the pulley from being dislodged by the shaft 9.

The hub 27 rests on a spacer 28 which is at contact with the inner ring, rotatably integral with the shaft 9, of a first bearings assembly 29. Such first bearings assembly is clamped in a packed state by the same hub 27 against inner radial walls 25" of the tubular structure 25.

The weight of the rotating parts of the tool assembly, such as the tool 17, the shaft 9 and the pulley 18, are thus supported by inner walls 25" of the tubular structure 25.

As mentioned previously, the kneading tool 17 is fitted on the lower end 9" of the shaft 9 instead.

In particular, the hub of the kneading tool is fitted on the shaft 9, by means of an expansion locking device 30.

Such expansion locking device comprises a first and a second sleeve 31, 32, mounted one into the other, concentric and at contact with respect to each other at respective conical lateral walls. The first sleeve 31 is pressure-coupled to the shaft, while the second sleeve 32 has grooves that make it expandable radially. The fastening - by means of screws - of such first and second sleeve tends to near them axially and make the respective conical walls to cooperate to expand the second sleeve and thus generate equal and opposite radial forces, on the hub and on the first sleeve, which connect these two elements in rotation by friction.

A plate 33 is mounted on the lower face of the shaft 9 to constitute a shoulder for the first sleeve 31 and prevent the tool 17 from possibly slipping off from the end of the shaft. Lastly, a cover 34 closes the lower side of the hub to physically separate the previously mentioned connection part from the environment in which the kneading is carried out.

The shaft 9 has a shoulder 9"', immediately above the lower end of the shaft, which - through a further spacer 35 -clamps in a packed state a second bearings assembly 29" against further inner radial walls 25"' of the tubular structure 25. Possible upwards thrusts on the kneading tool are thus countered by the inner radial walls 25"' of the tubular structure 25.

A formation of annular gaskets 37 contained within a sleeve 36 anchored at the upper part to the tubular structure 25 is arranged between the shoulder and the hub of the kneading tool. The gaskets 37 are arranged opposite to each other so as to prevent parts of the product being kneaded from reaching the lower bearing and above all they allow vacuum or pressurised kneading within the tank.

An opening 38 on the lateral wall of the tubular structure 25 allows introducing lubricating substances into the space in which the second bearings assembly 29" is received, between the shaft 9 and the tubular structure 25. The previously mentioned formation of gaskets is capable of entirely preventing such substances from contaminating the environment in which the kneading is carried out.

Thus, the configuration of the system for fastening the previously mentioned tool allows identifying a clean side of the tools assembly which extends up to above the hub of the kneading tool, as observable in figure 6, where an optional partition wall 39 adapted to isolate the environment in which the kneading is carried out, is illustrated.

Obviously, without prejudice to the principle of the invention, the construction details and the embodiments may vary, even widely, with respect to what has been illustrated purely by way of non-limiting example, without departing from the scope of protection of the invention, as defined by the attached claims.

## Claims

1. System for fastening a kneading tool to a head assembly of a kneading machine, in particular a machine for kneading food substances, comprising:
- a support structure (11);
- a shaft (9) rotatably mounted on said support structure;
- a kneading tool (17) mounted, rotatably integral, on said shaft,
**characterised in that** said tool is fitted on said shaft by means of an expansion locking device (30).

2. System according to claim 1, **characterised in that** said shaft has a first substantially cylindrical end portion (9"), on which the hub of said tool is fitted by means of said expansion locking device (30).

3. System according to claim 2, **characterised in that** said expansion locking device comprises a first and a second sleeve (31, 32), mounted one into the other, concentric and at contact with respect to each other at respective conical lateral walls, said first and second sleeve being interposed between said first end portion of said shaft and said hub of said tool and fastened to each other so as to provide a rigid connection in rotation of said hub with said shaft.

4. System second according to any one of the preceding claims, **characterised in that** a pulley (18) is fitted on a second end portion (9') of said shaft, a tubular support (25) being arranged around said shaft, interposed between said pulley and said hub, to freely rotatably support said shaft.

5. System according to claim 4, **characterised in that** said tubular support comprises outer radial arms (25') which rest on a supporting plate of said support structure.

6. System second according to any one of the preceding claims, **characterised in that** a formation of opposite gaskets (37) is mounted on said shaft, above said locking device.

7. System for fastening a kneading tool to a head assembly of a kneading machine, in particular a machine for kneading food substances, comprising:
- a support structure (11);
- a shaft (9) rotatably mounted on said support structure;
- a kneading tool (17) mounted, rotatably integral, on said shaft,
**characterised in that** said shaft, alongside the respective kneading tool, is mounted freely rotatable on a first support plate (24) resting on a framework (23) of said support structure, said system providing for a group of first plates, each provided with at least one respective kneading tool, which are interchangeable with each other on said framework.

8. System according to claim 7, **characterised in that** it comprises a drive unit supported by a second support plate resting on said framework (23) of said support structure, said system providing for a group of second plates, each provided with a respective drive unit, which are interchangeable with each other on said framework.
